(19) **Europäisches Patentamt**

**European Patent Office**

**Office européen des brevets**

(11) **EP 1 116 184 B1**

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(21) Anmeldenummer: **99953676.6**

(22) Anmeldetag: **01.09.1999**

(51) Int Cl.⁷: **G06T 9/00**

(86) Internationale Anmeldenummer:
**PCT/DE99/02763**

(87) Internationale Veröffentlichungsnummer:
**WO 00/019373 (06.04.2000 Gazette 2000/14)**

(54) **VERFAHREN UND ANORDNUNG ZUR BEARBEITUNG EINES DIGITALISIERTEN BILDES MIT BILDPUNKTEN**

METHOD AND ARRAY FOR PROCESSING A DIGITIZED IMAGE WITH IMAGE POINTS

PROCEDE ET SYSTEME DE TRAITEMENT D'UNE IMAGE NUMERISEE DOTEE DE POINTS D'IMAGES

(84) Benannte Vertragsstaaten:
**DE FR GB IT NL SE**

(30) Priorität: **29.09.1998 DE 19844664**

(43) Veröffentlichungstag der Anmeldung:
**18.07.2001 Patentblatt 2001/29**

(73) Patentinhaber: **SIEMENS AKTIENGESELLSCHAFT**
**80333 München (DE)**

(72) Erfinder:
• **PANDEL, Jürgen**
  **D-83620 Feldkirchen-Westerham (DE)**
• **BÄSE, Gero**
  **D-81739 München (DE)**
• **OERTEL, Norbert**
  **D-80335 München (DE)**

(56) Entgegenhaltungen:
EP-A- 0 540 961  EP-A- 0 582 819
WO-A-98/15915  WO-A-98/29834
US-A- 5 771 102

**Beschreibung**

Die Erfindung betrifft ein Verfahren sowie eine Anordnung zur Bearbeitung eines digitalisierten Bildes mit Bildpunkten.

Eine solche Anordnung und ein solches Verfahren ist aus [1] bekannt.

Bei der aus [1] bekannten Anordnung bzw. bei dem aus [1] bekannten Verfahren weist ein zu bearbeitendes digitalisiertes Bild Bildpunkte auf, denen jeweils Codierungsinformation zugeordnet ist.

Unter Codierungsinformation ist im weiteren dem jeweiligen Bildpunkt zugeordnete Helligkeitsinformation (Luminanzwert) und/oder Chrominanzinformation (Farbwert) zu verstehen.

Die Bildpunkte sind in Bildblöcke gruppiert, wobei jeder Bildblock üblicherweise 8 * 8 oder 16 * 16 Bildpunkte aufweist.

Die Bildblöcke sind ferner in Makroblöcke gruppiert, wobei jeder Makroblock vier Bildblöcke aufweist, die Codierungsinformation in Form von Helligkeitsinformation enthalten (Luminanzbildblöcke) sowie zwei Bildblöcke, die Chrominanzinformation enthalten (Chrominanzbildblöcke).

Bei dem aus [1] bekannten Verfahren zur Bildcodierung, welches gemäß dem H.263/V.2-Standard ausgestaltet ist, ist es vorgesehen, zur Codierung eines digitalisierten Bildes eine sogenannte Differenzbildcodierung einzusetzen.

Gerade bei der Verwendung einer solchen Differenzbildcodierung tritt bei einer sich bewegenden Kamera, die eine Szene aufnimmt, oder auch bei einer aufgenommenen Szene, die Änderungen unterworfen ist, das Problem auf, daß der aufgenommene Hintergrund nicht stationär ist.

Besondere Bedeutung erlangt diese Problematik bei der Benutzung solcher Verfahren zur Bildcodierung im Rahmen eines mobilen Kommunikationsgeräts, beispielsweise bei der Benutzung im Rahmen eines Videohandys.

Unter einem Videohandy ist eine Vorrichtung zu verstehen, in der eine Kamera zur Aufnahme einer Folge von Bildern und ein Telefon in einer Vorrichtung integriert ist, wobei das Telefon ein Funktelefon ist.

Bei der üblichen Differenzbildcodierung wird in einem solchen Fall eines sich stark ändernden Hintergrunds ein hoher Anteil einer zur Verfügung stehenden Datenrate für die Kommunikation zur Codierung für den sich stark ändernden Hintergrund benötigt, so daß für ein interessierendes Objekt, welches in einem Vordergrund des Bildes zu sehen ist und sich nur gegenüber dem Hintergrund in geringem Maße verändert, ein geringerer Anteil an zur Verfügung stehender Datenrate verbleibt und dementsprechend die Qualität des jeweils codierten Bildes zu schlecht ist.

Oftmals ist es jedoch wünschenswert, daß ein sich im Vordergrund befindendes Objekt eine gute Qualität aufweist, während für den Hintergrund durchaus eine schlechtere Qualität bei der Bildcodierung in geringer Auflösung akzeptabel ist.

In [1] ist beschrieben, daß in einem optionalen Codiermodus (slice structured mode) das digitalisierte Bild in Rechtecke, die sogenannten Slices, unterteilt wird, und jedem Rechteck jeweils separat Codierparameter zugewiesen werden.

Mit den Codierparametern wird unter anderem angegeben, mit welcher Quantisierung das in dem jeweiligen Rechteck enthaltene Objekt codiert werden soll.

Nachteilig bei dieser aus [1] bekannten Vorgehensweise ist, daß das gesamte Bild in einzelne Rechtecke zerlegt werden muß. Dies führt zu einer erheblichen Inflexibilität im Rahmen der Codierung eines digitalisierten Bildes. Ein weiterer Nachteil bei der aus [1] bekannten Vorgehensweise ist darin zu sehen, daß nur eine einheitliche Ortsauflösung für alle Slices verwendet werden kann.

Aus [2] ist ein objektbasiertes Bildcodierungsverfahren, welches als MPEG-4-Bildcodierungsverfahren bezeichnet wird, bekannt. Bei diesem Verfahren werden verschiedene Objekte innerhalb des digitalisierten Bildes separat voneinander codiert. Die aus der Codierung der einzelnen Bildobjekte entstehenden Videodatenströme werden unter Verwendung eines Multiplexers zusammengeführt. Das Verfahren gemäß dem MPEG-4-Standard weist insbesondere den Nachteil auf, daß aufgrund der sehr aufwendigen Art der Codierung der einzelnen Videodatenströme bei einer Vielzahl von zu codierenden Bildobjekten für eine Codierung in Echtzeit und für eine aus der codierten Menge von Videodatenströmen resultierende automatische Generierung einer Szenenbeschreibung, mit der das Zusammenwirken der einzelnen Bildobjekte innerhalb des digitalisierten Bildes beschrieben wird, eine erhebliche Rechenleistung benötigt wird. Die dafür erforderliche Rechenleistung ist insbesondere bei mobilen Kommunikationsgeräten, beispielsweise einem Videohandy, derzeit nicht verfügbar.

Aus [3] ist ein Verfahren zur Segmentierung eines Bildes in Bildobjekte, welches als Bewegtobjektsegmentierung, bezeichnet wird, bekannt.

Aus [4] ist es bekannt, im Rahmen einer blockbasierten Bildcodierung entstehende Blockartefakte durch Anwendung eines Blockrandfilters zu verringern.

Aus [5] ist ein Verfahren zur Bearbeitung eines digitalisierten Bildes mit Bildpunkten bekannt, bei dem die Bildpunkte in Bildblöcke gruppiert sind, bei dem das Bild in mindestens ein erstes Bildobjekt und ein zweites Bildobjekt segmentiert wird, wobei zumindest einem Teil eines Rands des ersten Bildobjekts mindestens ein Bildblock zugeordnet wird und bei dem mindestens ein Bildblock Information über das Bildobjekt zugeordnet wird.

[5] offenbart nicht, dass das Verfahren in einem mobilen Kommunikationsgerät eingesetzt wird. Dieses Merkmal ist jedoch aus [6] bekannt, wobei ein Verfahren zur Übertragung von Bildern zwischen Mobiltelefonen beschrieben wird.

Somit liegt der Erfindung das Problem zugrunde, ein Verfahren sowie eine Anordnung zur Bearbeitung eines digitalisierten Bildes mit Bildpunkten anzugeben, welches bzw. welche eine erhöhte Flexibilität hinsichtlich der Codierung eines Bildes aufweist sowie eine gegenüber den bekannten Verfahren verminderte Rechenleistung erfordert.

Das Problem wird durch das Verfahren sowie durch die Anordnung mit den Merkmalen gemäß den unabhängigen Patentansprüchen gelöst.

Ein Verfahren zur Bearbeitung eines digitalisierten Bildes mit Bildpunkten, weist folgende Schritte auf:

> a) die Bildpunkte sind in Bildblöcke gruppiert,
> b) das Bild wird in mindestens ein erstes Bildobjekt und ein zweites Bildobjekt segmentiert, wobei zumindest einem Teil eines Randes des ersten Bildobjekts mindestens ein Bildblock zugeordnet wird, und
> c) dem mindestens einem Bildblock wird Information über das Bildobjekt zugeordnet.

Eine Anordnung zur Bearbeitung eines digitalisierten Bildes mit Bildpunkten enthält einen Prozessor, der derart eingerichtet ist, daß

> a) die Bildpunkte in Bildblöcke gruppiert sind,
> b) das Bild in mindestens ein erstes Bildobjekt und ein zweites Bildobjekt segmentiert wird, wobei zumindest einem Teil eines Randes des ersten Bildobjekts mindestens ein Bildblock zugeordnet wird und
> c) dem mindestens einem Bildblock Information über das Bildobjekt zugeordnet wird.

Durch die Erfindung wird eine einfachere Art der Codierung von Bildobjekten erreicht, mit der eine flexible Aufteilung zur Verfügung stehender Datenrate zur Codierung unterschiedlicher Bildobjekte möglich wird.

Bevorzugte Weiterbildungen der Erfindung ergeben sich aus den abhängigen Ansprüchen.

Bevorzugt sind jeweils mehrere Bildblöcke zu einem Makroblock gruppiert. Mindestens dem Teil des Rands wird ein Makroblock zugeordnet.

In einer weiteren Ausgestaltung ist es vorgesehen, daß mindestens dem Teil des Rands des ersten Bildobjekts mindestens ein Luminanzblock des Makroblocks zugeordnet wird.

Ferner wird bevorzugt dem gesamten Rand des ersten Bildobjekts mindestens ein Bildblock zugeordnet.

Ferner ist es in einer Weiterbildung vorgesehen, daß all den Makroblöcken jeweils Information über das Bildobjekt zugeordnet ist, in welchen der Rand des ersten Bildobjekts enthalten ist.

In einer weiteren Ausgestaltung wird das erste Bildobjekt unter Verwendung einer Makroblockadresse, die jeweils einem Makroblock zugeordnet ist, adressiert.

In einer weiteren Ausgestaltung ist es vorgesehen, das zweite Bildobjekt unter Verwendung einer Makroblockadresse, die jeweils einem Makroblock zugeordnet ist, zu adressieren.

Bevorzugt werden die Bildobjekte mit unterschiedlicher Qualität codiert, wobei bevorzugt eine Qualitätsangabe, mit der angegeben wird, in welcher Qualität ein Bildobjekt codiert wird, mindestens einem Makroblock, der in dem entsprechenden Bildobjekt enthalten ist, zugeordnet wird.

Das Verfahren sowie die Vorrichtung können zur Codierung eines digitalisierten Bildes oder zur Decodierung eines digitalisierten Bildes eingesetzt werden.

Die Vorrichtung sowie das Verfahren eignen sich zum Einsatz in einem mobilen Kommunikationsgerät, beispielsweise einem Videohandy.

Ein Ausführungsbeispiel der Erfindung ist in den Figuren dargestellt und wird im weiteren näher erläutert.

Es zeigen

Figur 1  eine Skizze eines Bildes, welches gemäß dem Ausführungsbeispiel bearbeitet wird;

Figur 2  eine Anordnung zweier Rechner, einer Kamera und eines Bildschirms, mit denen die Codierung, die Übertragung sowie die Decodierung und Darstellung der Bilddaten erfolgen;

Figur 3  eine Skizze einer Vorrichtung zur blockbasierten Codierung eines digitalisierten Bildes;

Figur 4  ein Ablaufdiagramm, in dem die Verfahrensschritte zur Codierung, Übertragung und Decodierung eines digitalisierten Bildes dargestellt sind.

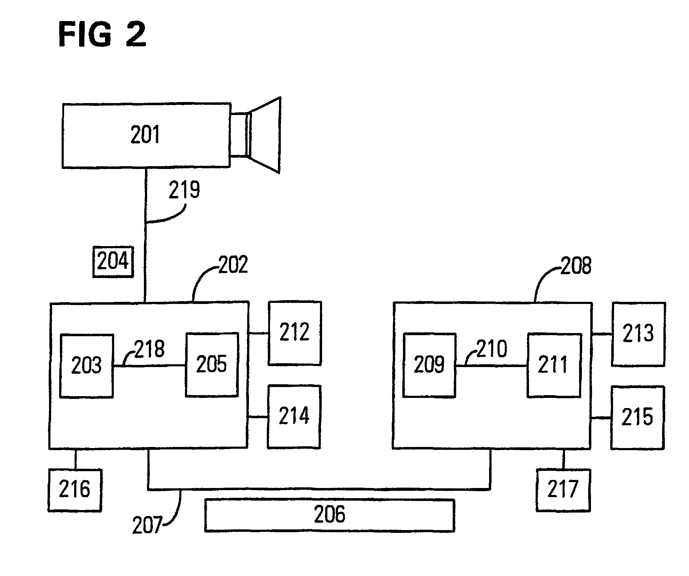

In **Fig.2** ist eine Anordnung dargestellt, die zwei Rechner 202, 208 und eine Kamera 201 umfaßt, wobei Bildcodierung, Übertragung der Bilddaten und Bilddecodierung veranschaulicht werden.

Eine Kamera 201 ist mit einem ersten Rechner 202 über eine Leitung 219 verbunden. Die Kamera 201 übermittelt aufgenommene Bilder 204 an den ersten Rechner 202. Der erste Rechner 202 verfügt über einen ersten Prozessor 203, der über einen Bus 218 mit einem Bildspeicher 205 verbunden ist. Mit dem ersten Prozessor 203 des ersten Rechners 202 wird ein Verfahren zur Bildcodierung durchgeführt. Auf diese Art codierte Bilddaten 206 werden von dem ersten Rechner 202 über eine Kommunikationsverbindung 207, vorzugsweise eine Leitung oder eine Funkstrecke, zu einem zweiten Rechner 208 übertragen. Der zweite Rechner 208 enthält einen zweiten Prozessor 209, der über einen Bus 210 mit einem Bildspeicher 211 verbunden ist. Mit dem zweiten Prozessor 209 wird ein Verfahren zur Bilddecodierung durchgeführt.

Sowohl der erste Rechner 202 als auch der zweite Rechner 208 verfügen jeweils über einen Bildschirm 212 bzw. 213, auf dem die Bilddaten 204 visualisiert werden, wobei die Visualisierung auf dem Bildschirm 212 des ersten Rechners 202 üblicherweise nur zu Kontrollzwecken erfolgt. Zur Bedienung sowohl des ersten Rechners 202 als auch des zweiten Rechners 208 sind jeweils Eingabeeinheiten vorgesehen, vorzugsweise eine Tastatur 214 bzw. 215, sowie eine Computermaus 216 bzw. 217.

Die Bilddaten 204, die von der Kamera 201 über die Leitung 219 zu dem ersten Rechner 202 übertragen werden, sind Daten im Zeitbereich, während die Daten 206, die von dem ersten Rechner 202 zu dem zweiten Rechner 208 über die Kommunikationsverbindung 207 übertragen werden, Bilddaten im Spektralbereich sind.

Auf dem Bildschirm 213 werden die decodierten Bilddaten dargestellt.

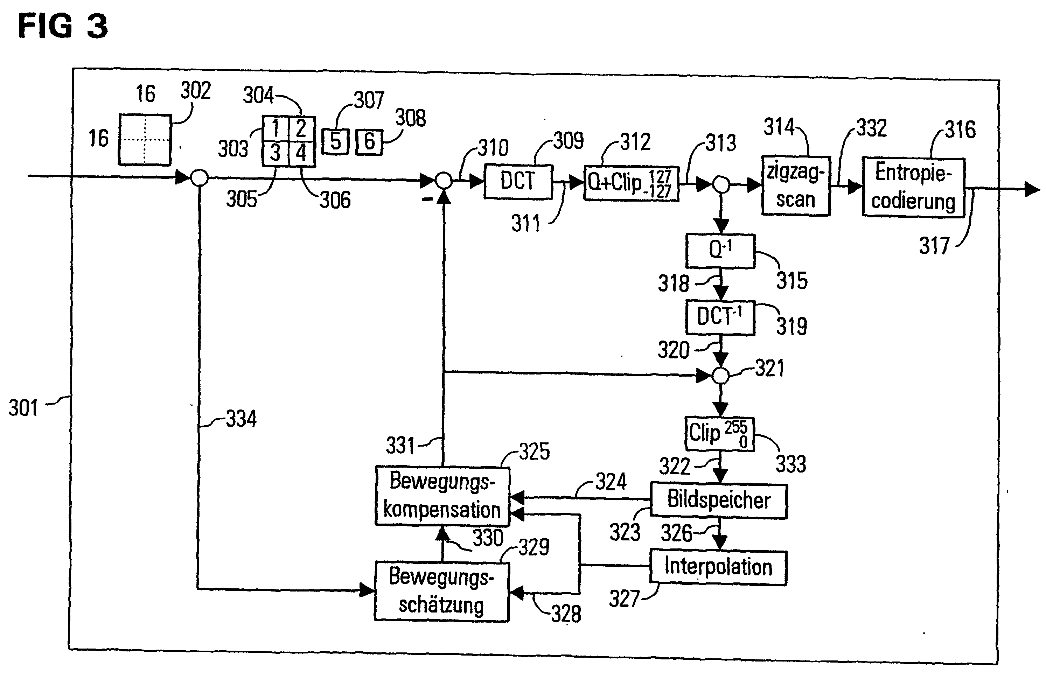

**Fig.3** zeigt eine Skizze einer Anordnung zur Durchführung eines blockbasierten Bildcodierverfahrens gemäß H.263-Standard (siehe [1]).

Ein zu codierender Videodatenstrom mit zeitlich aufeinanderfolgenden digitalisierten Bildern wird einer Bildcodierungseinheit 301 zugeführt. Die digitalisierten Bilder sind unterteilt in Makroblöcke 302, wobei jeder Makroblock 16x16 Bildpunkte enthält. Der Makroblock 302 umfaßt 4 Bildblöcke 303, 304, 305 und 306, wobei jeder Bildblock 8x8 Bildpunkte, denen Luminanzwerte (Helligkeitswerte) zugeordnet sind, enthält. Weiterhin umfaßt jeder Makroblock 302 zwei Chrominanzblöcke 307 und 308 mit den Bildpunkten zugeordneten Chrominanzwerten (Farbdifferenzwerte).

Die Bildblöcke werden einer Transformationscodierungseinheit 309 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 310 der Transformationscodierungseinheit (Diskrete Cosinus Transformation, DCT) 309 zugeführt. Dazu wird über eine Verbindung 334 der aktuelle Makroblock 302 einer Bewegungsschätzungseinheit 329 mitgeteilt. In der Transformationscodierungseinheit 309 werden für die zu codierenden Bildblöcke bzw. Differenzbildblöcke Spektralkoeffizienten 311 gebildet und einer Quantisierungseinheit 312 zugeführt.

Quantisierte Spektralkoeffizienten 313 werden sowohl einer Scaneinheit 314 als auch einer inversen Quantisierungseinheit 315 in einem Rückwärtspfad zugeführt. Nach einem Scanverfahren, z.B. einem "zigzag"-Scanverfahren, wird auf den gescannten Spektralkoeffizienten 332 eine Entropiecodierung in einer dafür vorgesehenen Entropiecodierungseinheit 316 durchgeführt. Die entropiecodierten Spektralkoeffizienten werden als codierte Bilddaten 317 über einen Kanal, vorzugsweise eine Leitung oder eine Funkstrecke, zu einem Decoder übertragen.

In der inversen Quantisierungseinheit 315 erfolgt eine inverse Quantisierung der quantisierten Spektralkoeffizienten 313. So gewonnene Spektralkoeffizienten 318 werden einer inversen Transformationscodierungseinheit 319 (Inverse Diskrete Cosinus Transformation, IDCT) zugeführt. Rekonstruierte Codierungswerte (auch Differenzcodierungswerte) 320 werden im Differenzbildmodus einem Addierer 321 zugeführt. Der Addierer 321 erhält ferner Codierungswerte eines Bildblocks, die sich aus einem zeitlich vorangegangenen Bild nach einer bereits durchgeführten Bewegungskompensation ergeben. Mit dem Addierer 321 werden rekonstruierte Bildblöcke 322 gebildet und in einem Bildspeicher 323 abgespeichert.

Chrominanzwerte 324 der rekonstruierten Bildblöcke 322 werden aus dem Bildspeicher 323 einer Bewegungskompensationseinheit 325 zugeführt. Für Helligkeitswerte 326 erfolgt eine Interpolation in einer dafür vorgesehenen Interpolationseinheit 327. Anhand der Interpolation wird die Anzahl in dem jeweiligen Bildblock enthaltener Helligkeitswerte vorzugsweise vervierfacht. Alle Helligkeitswerte 328 werden sowohl der Bewegungskompensationseinheit 325 als auch der Bewegungsschätzungseinheit 329 zugeführt. Die Bewegungsschätzungseinheit 329 erhält außerdem die Bildblöcke des jeweils zu codierenden Makroblocks (16x16 Bildpunkte) über die Verbindung 334. In der Bewegungsschätzungseinheit 329 erfolgt die Bewegungsschätzung unter Berücksichtigung der interpolierten Helligkeitswerte ("Bewegungsschätzung auf Halbpixelbasis").

Das Ergebnis der Bewegungsschätzung ist ein Bewegungsvektor 330, durch den eine örtliche Verschiebung des ausgewählten Makroblocks aus dem zeitlich vorangegangenen Bild zu dem zu codierenden Makroblock 302 zum Ausdruck kommt.

Sowohl Helligkeitsinformation als auch Chrominanzinformation bezogen auf den durch die Bewegungsschätzungseinheit 329 ermittelten Makroblock werden um den Bewegungsvektor 330 verschoben und von den Codierungswerten des Makroblocks 302 subtrahiert (siehe Datenpfad 331).

Als Ergebnis der Bewegungschätzung ergibt sich somit der Bewegungsvektor 330 mit zwei Bewegungsvektorkomponenten, einer ersten Bewegungsvektorkomponente $BV_x$ und einer zweiten Bewegungsvektorkomponente $BV_y$ entlang der ersten Richtung x und der zweiten Richtung y:

$$BV = \begin{pmatrix} BV_x \\ BV_y \end{pmatrix}.$$

Der Bewegungsvektor 330 wird dem Bildblock zugeordnet.

Die Bildcodierungseinheit aus **Fig.3** liefert somit für alle Bildblöcke bzw. Makrobildblöcke einen Bewegungsvektor 330.

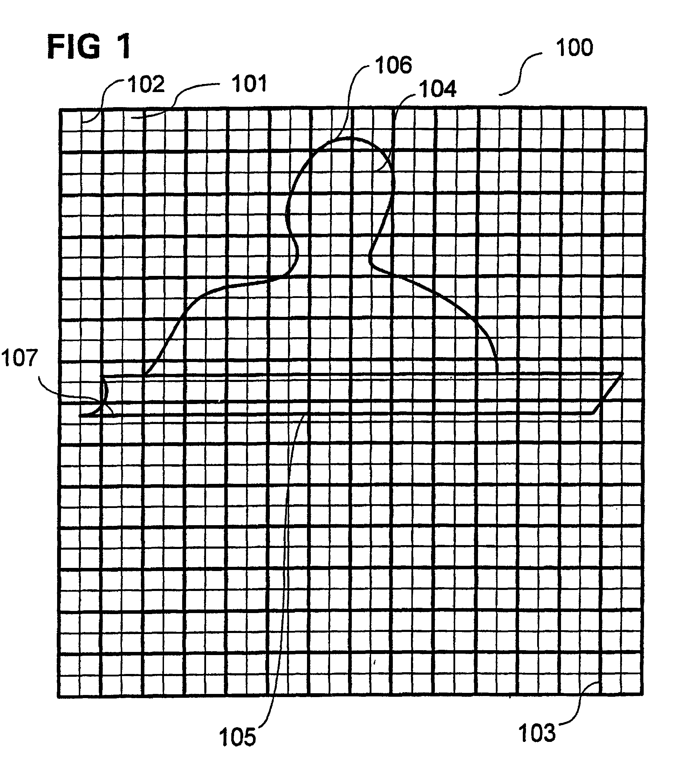

**Fig.1** zeigt ein von der Kamera 201 aufgenommenes Bild 100, welches Bildpunkte aufweist, wobei die Bildpunkte in Bildblöcke 101 gruppiert sind. Es sind jeweils 8x8 Bildpunkte zu einem Bildblock 101 gruppiert.

Den Bildpunkten ist Luminanzinformation zugeordnet. Vier Luminanzbildblöcke 101 werden zu einem Makroblock 102 gruppiert.

**Fig.1** zeigt ein erstes Bildobjekt 104, welches eine Person beschreibt, ein zweites Bildobjekt 105, welches eine Tischoberfläche beschreibt sowie ein drittes Objekt 103, welches einen Bildhintergrund beschreibt.

Das erste Bildobjekt 104 und das zweite Bildobjekt 105 bilden gemeinsam einen Bildvordergrund.

Das Bild wird in einem ersten Schritt (Schritt 401,

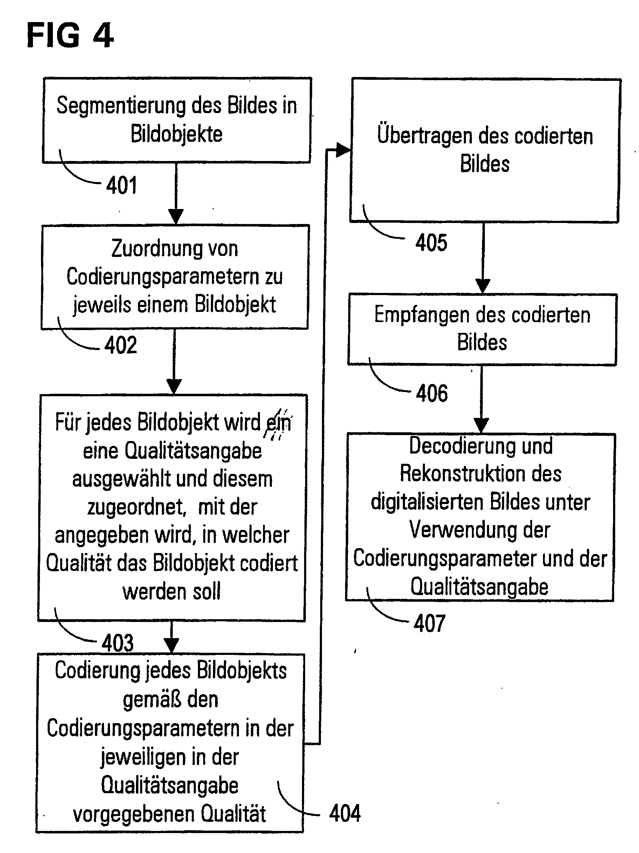

vgl. **Fig.4)** in mehrere Bildobjekte segmentiert. Die Segmentierung des Bildes erfolgt gemäß dem in [3] beschriebenen Verfahren, welches als Bewegtobjektsegmentierung bezeichnet wird. Die Segmentierung erfolgt derart, daß ein Rand 106, 107 des ersten Bildobjekts 104 bzw. des zweiten Bildobjekts 105 jeweils mit einer Blockgrenze eines Makroblocks oder zumindest mit den Blockgrenzen der Luminanzbildblöcke in einem Makroblock übereinstimmen.

In einem zweiten Schritt (Schritt 402) wird jedem Bildobjekt 103, 104, 105 jeweils ein Satz von Codierungsparametern zugeordnet.

Mit den Codierungsparametern werden u.a. die zur Codierung des jeweiligen Bildobjekts zu verwendende örtliche Auflösung, Bewegungsvektoren, Codierart (Intra-Bildcodierung bzw. Inter-Bildcodierung), Quantisierung, usw. angegeben.

Ferner wird für jedes Bildobjekt 103, 104, 105 in einem weiteren Schritt (Schritt 403) eine Qualitätsangabe ausgewählt und dem jeweiligen Bildobjekt 103, 104, 105 als Codierungsparameter zugeordnet. Mit der Qualitätsangabe wird angegeben, in welcher Qualität das Bildobjekt jeweils codiert werden soll.

Die Qualitätsangabe ist in diesem Beispielsfall durch die Angabe der zu wählenden Quantisierung gegeben.

Die Codierungsparameter werden in einem dem jeweiligen Bildobjekt 103, 104, 105 zugeordneten Bildobjekt-Kopffeld (Object Header) gespeichert, codiert und gemeinsam mit der restlichen zu codierenden Bildinformation, den Bildblöcken bzw. der Differenzbildinformation, übertragen.

Gemäß dem oben beschriebenen und in **Fig. 3** dargestellten Verfahren wird in einem weiteren Schritt (Schritt 404) jedes Bildobjekt 103, 104, 105 gemäß den Codierungsparametern in der jeweiligen, in der Qualitätsangabe vorgegebenen, Qualität codiert.

Hierbei wird ein Vordergrundobjekt d.h. das erste Bildobjekt 104 oder auch das zweite Bildobjekt 105 in einer besseren Bildqualität codiert, d.h. für die Codierung des ersten Bildobjekts 104 und des zweiten Bildobjekts 105 wird mehr Datenrate zur Verfügung gestellt als zur Codierung des Hintergrundbildobjekts, des dritten Bildobjekts 103.

Es ist zu bemerken, daß es nicht erforderlich ist, daß die einzelnen Bildobjekte disjunkt sind, jedoch enthält die Vereinigungsmenge aller Bildpunkte des ersten Bildobjekts 104, des zweiten Bildobjekts 105 sowie des dritten Bildobjekts 103 alle Bildpunkte des Bildes 100.

Für die Codierung des Bildes 100 ist jeweils für das gesamte Bild ein Bild-Kopffeld vorgesehen, in dem verschiedene Codierungsparameter angegeben sind, die für die Codierung des gesamten Bildes gleich sind.

So wird in dem Bild-Kopffeld eine Segmentierungsangabe angegeben, mit der beschrieben wird, in welcher Weise die Segmentierung des Bildes 100 in Bildobjekte 103, 104, 105, erfolgt.

Vorgesehen sind zur Codierung der Segmentierungsangabe zwei Bit in dem Bild-Kopffeld. Es werden vier unterschiedliche Arten der Segmentierung unterschieden:

- erste Segmentierungsart (Code 00):

    Das beschriebene Verfahren wird zur Codierung des Bildes 100 nicht eingesetzt.

- zweite Segmentierungsart (Code 01):

    Alle Bildobjekte einschließlich der Hintergrundbildobjekte sind disjunkt und füllen das vorgegebene Bildformat des Bildes 100 genau aus.

- dritte Segmentierungsart (Code 10):

    Die Bildobjekte dürfen sich überlappen und dürfen auch außerhalb eines üblichen Bildrahmens liegen. Er liegt aber innerhalb eines vorgegebenen, gegenüber dem üblichen Bildrahmen größeren Rahmen, welcher nicht überschritten werden darf.

- vierte Segmentierungsart (Code 11):

    Mit Ausnahme des Hintergrundbildobjekts sind alle Bildobjekte disjunkt. Die vierte Segmentierungsart dient zur effizienten Codierung der Hintergrundinformation, da bereits codierter Hintergrund in einem Speicher, dem Hintergrundspeicher, gespeichert werden kann. Durch ein bewegtes Bildobjekt wieder aufgedeckter Hintergrund eines Bildes muß nicht wieder neu codiert werden. Der Hintergrund darf über den vorgegebenen Bildrahmen des Bildes 100 hinausragen, damit bei einer Bewegung der das Bild 100 aufnehmenden Kamera 201 auf bereits codierte Information zurückgegriffen werden kann. Wiederum wird ein vorgegebener Rahmen bestimmt, der größer ist als der übliche Bildrahmen des Bildes 100. Dieser vorgegebene Rahmen darf nicht überschritten werden.

Die codierte Information des Bildes wird in einem weiteren Schritt (Schritt 405) als codiertes Bild von dem ersten Rechner 202 zu dem zweiten Rechner 208 übertragen.

Von dem zweiten Rechner 208 wird in einem weiteren Schritt (Schritt 406) das codierte Bild empfangen.

In einem letzten Schritt (Schritt 407) wird die empfangene codierte Bildinformation decodiert und das digitalisierte Bild wird unter Verwendung der mitübertragenen Codierungsparameter und der Qualitätsangabe rekonstruiert.

Es können unterschiedliche Arten von Bildobjekten auftreten, wobei jeweils eine Art eines Bildobjekts durch einen Code in dem Kopffeld des jeweiligen Bildobjekts codiert ist.

Eine erste Art eines Bildobjekts ist ein Rechteckbildobjekt mit einer Breite w und einer Höhe h. Aufgrund der Übereinstimmung der Objektgrenzen (Rand des Bildobjekts) mit den Kanten der jeweiligen Makroblöcke erfolgt die Adressierung des Rechteckobjekts durch die absolute Makroblockadresse des linken oberen Makroblocks in dem Rechteckbildobjekt.

Die Makroblockadresse ist eine dem jeweiligen Makroblock zugeordnete Adresse, mit der im Rahmen der Bildcodierung jeder Makroblock eindeutig gekennzeichnet wird.

Die Breite w des Rechteckbildobjekts wird unter Verwendung einer variablen Längencodierung codiert.

Die Adressierung der Makroblöcke erfolgt derart, daß in dem Bild 100 zeilenweise von links nach rechts jeweils ein Wert, welcher die Makroblockadresse darstellt, von Makroblock zu Makroblock inkrementiert wird. Zur Codierung jeweils eines Bildobjekts ist ein Bildobjekt-Start-Code vorgesehen, mit dem angegeben wird, daß die weiteren Daten sich auf eine Codierung eines Bildobjekts beziehen. Somit folgt jeweils nach der Codierung des letzten Makroblocks eines Bildobjekts entweder ein neuer Bildobjekt-Start-Code oder ein neuer Bild-Start-Code, mit dem angegeben wird, daß im weiteren Daten eines neuen Bildes codiert sind.

Stimmen die Grenzen des Rechteckbildobjekts nicht mit dem Makroblockraster, wohl aber mit den Blockgrenzen der Luminanzbildblöcke überein, so wird die relative Lage der jeweiligen Luminanzbildblöcke zu den Makroblockgrenzen durch zusätzliche Bits in dem Bildobjekt-Kopffeld codiert.

Bildobjekte, welche nicht eine rechteckförmige Struktur aufweisen, werden derart segmentiert, daß der Rand des jeweiligen Bildobjekts mit den Blockgrenzen der Makroblöcke oder zumindest mit den Blockgrenzen der Luminanzbildblöcke übereinstimmen.

Die Adressierung des ersten Makroblocks des Bildobjekts erfolgt in diesem Fall durch die absolute Makroblockadresse gemäß dem oben beschriebenen Adressierungsschema.

Die Adressierung der folgenden, zu dem jeweiligen Bildobjekt gehörenden Makroblöcke erfolgt unter Verwendung einer Runlength-Codierung, wie aus dem Verfahren gemäß dem H.261-Standard bekannt.

Nach der Codierung des letzten Makroblocks in dem Bildobjekt folgt ebenfalls entweder ein neuer Bildobjekt-Start-Code oder ein neuer Bild-Start-Code.

Eine dritte Art eines Bildobjekts ist ein Hintergrundbildobjekt; in dem vorliegenden Fall stellt das dritte Bildobjekt 103 ein Hintergrundbildobjekt dar. Mit einem Hintergrundbildobjekt wird ein Hintergrund beschrieben, wobei die Information, welche in dem Hintergrund dargestellt ist, gegenüber der Information, die in einem Vordergrundbildobjekt beschrieben ist, eine geringere Bedeutung für den Betrachter aufweist.

Im Gegensatz zu dem aus [1] bekannten Slice Structured Mode ist das Hintergrundbildobjekt auch bei einem rechteckförmigen Bildobjekt, dem Rechteckobjekt, nicht notwendigerweise rechteckförmig.

Zur Codierung eines Hintergrundbildobjekts wird mit einem Bildobjekt-Start-Code begonnen. Die Adressierung der Makroblöcke des Hintergrundbildobjekts hängt von der ausgewählten, oben beschriebenen Segmentierungsart ab.

Bei der zweiten Segmentierungsart (Code 01) ist die Lage aller Hintergrundmakroblöcke, d.h. aller Makroblöcke, die in dem Hintergrundbildobjekt enthalten sind, nach der Codierung des letzten Bildobjekts eindeutig bestimmt und sie können nacheinander in der oben beschriebenen Weise gemäß der Adressierung der Makroblöcke adressiert werden. Makroblöcke, die nicht zu dem Bildhintergrund gehören, brauchen nicht durch eine Run-Length-Codierung übersprungen werden.

Bei der zweiten Segmentierungsart sowie bei der dritten Segmentierungsart (Code 10 und Code 11) erfolgt die Adressierung wie bei den Bildobjekten mit nicht rechteckförmiger Struktur.

Im weiteren werden einige Alternativen zu dem oben beschriebenen Ausführungsbeispiel dargestellt.

Alternativ zu der variablen Längencodierung kann eine Festlängencodierung zur Codierung der Breite w des Rechteckbildobjekts eingesetzt werden.

Auch eine differentielle Codierung aus der Größe und der Lage des Rechteckbildobjekts in einem Vorgängerbild des Bildes 100 kann im Rahmen des Verfahrens eingesetzt werden.

Eine Alternative zur Run-Length-Codierung bei der Codierung von Makroblöcken eines Bildobjekts, welches nicht eine rechteckförmige Struktur aufweist, ist eine sogenannte Shape-Codierung, wie sie in [2] beschrieben ist. Auch eine differentielle Codierung aus der Lage des Bildobjekts im Vorgängerbild kann zur Codierung der Makroblöcke eingesetzt werden.

Im Rahmen dieses oben beschriebenen Verfahrens kann ferner vorgesehen sein, daß nur rechteckförmige Bildobjekte eingesetzt werden. Dies führt zu einer Vereinfachung bei der Codierung, da in diesem Fall beim Überspringen von Makroblökken, die zu einem Rechteckbildobjekt gehören, nur eine Inkrementierung der Makroblockadresse um w Makroblöcke erforderlich ist. Auf diese Weise wird eine Reduktion erforderlicher Rechenoperationen im Rahmen der Codierung erreicht.

Diejenigen Bildobjekte, die für einen Betrachter des Bildes 100 besonders interessant sind, werden mit einer höheren Qualität codiert als die Bildobjekte, insbesondere die Hintergrundbildobjekte, welche für den Betrachter des Bildes 100 weniger interessant sind.

Aufgrund des Einsatzes eines blockbasierten Bildcodierverfahrens treten in den mit geringerer Qualität codierten Bildbereichen verstärkt sogenannte Blockartefakte, d.h. sichtbare Blockränder auf.

Diese werden in einer alternativen Ausführungsform durch Anwendung eines Blockrandfilters verringert. Eine solche Blockrandfilterung ist aus [4] bekannt. Die Blockrandfilterung kann sowohl im Rahmen der Decodierung als auch in der Rückkoppelschleife des Coders, wie er in **Fig.3** dargestellt ist, als sogenannter "Filter in the Loop" verwendet werden.

Die Blockrandfilterung wird vorzugsweise nur bei den Bildobjekten angewendet, die mit einer groben Quantisierung, d.h. mit einer geringen Qualität codiert werden.

Für den Fall einer starken Bewegung innerhalb einer Folge von Bildern kann es aber auch bei den mit erhöhter Qualität codierten Bildobjekten vorkommen, daß aufgrund der begrenzten Datenrate kurzfristig eine relativ grobe Quantisierung verwendet werden muß. In diesem Fall wird eine Blockrandfilterung temporär für diesen Zeitraum erhöhter Bewegung, welche optional durch eine Bewertung der ermittelten Bewegungsvektoren für die Bildobjekte ermittelt wird, eingesetzt.

Die Filterparameter der zur Blockrandfilterung eingesetzten Filter sind dynamisch anpaßbar an das jeweilige zu codierende Bild gemäß dem aus [4] bekannten Verfahren.

Ferner kann für die Übertragung der codierten Bilder ein Übertragungsfehlerschutz vorgesehen sein, beispielsweise ein CRC-Code (<u>C</u>yclic <u>R</u>edundancy <u>C</u>heck) oder auch ein sogenannter Lochungscode. Dabei werden vorzugsweise diejenigen Bildobjekte, die mit einer erhöhten Qualität codiert werden, mit einem Fehlerschutzmechanismus gegen Übertragungsfehler geschützt, welcher "mächtiger" ist als der Fehlerschutzmechanismus, der für Bildobjekte verwendet wird, welche mit einer geringeren Qualität codiert wurden.

Der Begriff "mächtiger" ist dahingehend zu verstehen, daß eine erhöhte Anzahl von Übertragungsfehlern mit dem jeweiligen Verfahren des Fehlerschutzes erkannt bzw. korrigiert werden können.

Die Qualitätsangabe ist kann in einer Variante auch durch die Angabe einer zu wählenden Ortsauflösung gegeben sein. Für diesen Fall wird das Vordergrundobjekt d.h. das erste Bildobjekt 104 oder auch das zweite Bildobjekt 105 in einer besseren Bildqualität, d.h. mit höherer Ortsauflösung codiert als das Hintergrundbildobjekt, das dritte Bildobjekt 103.

In diesem Dokument sind folgende Veröffentlichungen zitiert:

[1] ITU-T Draft Recommendation H.263, Video Coding for Low Bitrate Communication, September, 1997

[2] ISO/IEC JTC1/SC29/WG11, MPEG-4 Systems, Working Draft 4.0 of ISO/IEC 14496-1, A. Eleftheriadis, C. Herpel, L. Ward (ed.), 16. April 1997

[3] K.-P. Karmann et al, Moving object segmentation based on adaptive reference images, Proceedings of EUSIPCO-90, S. 951 - 954, Barcelona, September 1990

[4] DE 196 54 983 B

[5] WO 98 15915 A (Univ. Columbia) 16. April 1998

[6] US-A-5 771 102 (Pelz Rodolfo Mann et al) 23. Juni 1998

**Patentansprüche**

1. Verfahren zur Bearbeitung eines digitalisierten Bildes (100) mit Bildpunkten,

   a) bei dem die Bildpunkte in Bildblöcke gruppiert sind,
   b) bei dem das Bild in mindestens ein erstes Bildobjekt (104) und ein zweites Bildobjekt (105) segmentiert wird, wobei zumindest einem Teil eines Rands des ersten Bildobjekts mindestens ein Bildblock zugeordnet wird,
   c) bei dem dem mindestens einen Bildblock Information über das erste Bildobjekt zugeordnet wird,
   d) bei dem die Bildobjekte mit unterschiedlicher Qualität codiert werden,
   e) bei dem eine Qualitätsangabe, mit der angegeben wird, in welcher Qualität ein Bildobjekt codiert wird, mindestens einem Makroblock (102) , der in dem entsprechenden Bildobjekt enthalten ist, zugeordnet wird,

   **dadurch gekennzeichnet, daß**

   f) die Qualität durch eine Ortsauflösung bestimmt wird.

**2.** Verfahren nach Anspruch 1,

> a) bei dem jeweils mehrere Bildblöcke zu einem Makroblock gruppiert sind, und
> b) bei dem mindestens dem Teil des Rands ein Makroblock zugeordnet wird.

**3.** Verfahren nach Anspruch 2,
bei dem mindestens dem Teil des Rands des ersten Bildobjekts mindestens ein Luminanzblock des Makroblocks zugeordnet wird.

**4.** Verfahren nach einem der Ansprüche 1 bis 3,
bei dem dem gesamten Rand des ersten Bildobjekts mindestens ein Bildblock zugeordnet wird.

**5.** Verfahren nach einem der Ansprüche 2 bis 4,
bei dem all den Makroblöcken jeweils Information über das Bildobjekt zugeordnet ist, in welchen der Rand enthalten ist.

**6.** Verfahren nach einem der Ansprüche 2 bis 5,
bei dem das erste Bildobjekt unter Verwendung einer Makroblockadresse, die jeweils einem Makroblock zugeordnet ist, adressiert wird.

**7.** Verfahren nach einem der Ansprüche 2 bis 6,
bei dem das zweite Bildobjekt unter Verwendung einer Makroblockadresse, die jeweils einem Makroblock zugeordnet ist, adressiert wird.

**8.** Verfahren nach einem der Ansprüche 1 bis 7,
eingesetzt zur Codierung eines digitalisierten Bildes.

**9.** Verfahren nach einem der Ansprüche 1 bis 7,
eingesetzt zur Decodierung eines digitalisierten Bildes.

**10.** Verfahren nach einem der Ansprüche 1 bis 9,
eingesetzt in einem mobilen Kommunikationsgerät.

**11.** Anordnung zur Bearbeitung eines digitalisierten Bildes (100) mit Bildpunkten,
mit einem Prozessor, der derart eingerichtet ist, dass

> a) die Bildpunkte in Bildblöcke (101)gruppiert sind,
> b) das Bild in mindestens ein erstes Bildobjekt (104) und ein zweites Bildobjekt (105) segmentiert wird, wobei zumindest einem Teil eines Rands des ersten Bildobjekts mindestens ein Bildblock zugeordnet wird, und
> c) dem mindestens einen Bildblock Information über das erste Bildobjekt zugeordnet wird,

dass die Bildobjekte mit unterschiedlicher Qualität codiert werden,
dass eine Qualitätsangabe, mit der angegeben wird, in welcher Qualität ein Bildobjekt codiert wird, mindestens einem Makroblock, der in dem entsprechenden Bildobjekt enthalten ist, zugeordnet wird,
**dadurch gekennzeichnet, daß**,
die Qualität durch eine Ortsauflösung bestimmt wird.

**12.** Anordnung nach Anspruch 11,
bei der der Prozessor derart eingerichtet ist, dass

> a) jeweils mehrere Bildblöcke zu einem Makroblock gruppiert sind, und
> b) mindestens dem Teil des Rands ein Makroblock zugeordnet wird.

**13.** Anordnung nach Anspruch 11 oder 12,
eingesetzt zur Codierung eines digitalisierten Bildes.

**14.** Anordnung nach Anspruch 11 oder 12,
eingesetzt zur Decodierung eines digitalisierten Bildes.

**15.** Anordnung nach einem der Ansprüche 11 bis 14,
eingesetzt in einem mobilen Kommunikationsgerät.

**Claims**

**1.** Method for processing a digitized picture (100) with pixels,

> a) in which the pixels are grouped into picture blocks,
> b) in which the picture is segmented into at least a first picture object (104) and a second picture object (105), at least one picture block being assigned to at least a part of an edge of the first picture object,
> c) in which information about the first picture object is assigned to the at least one picture block,
> d) in which the picture objects are coded with different quality,
> e) in which a quality specification indicating the quality with which a picture object is coded is assigned to at least one macroblock (102) contained in the corresponding picture object,

**characterized in that**

> f) in which the quality is determined by a spatial resolution.

**2.** Method according to Claim 1,

a) in which a plurality of picture blocks are in each case grouped to form a macroblock, and
b) in which a macroblock is assigned at least to the part of the edge.

3. Method according to Claim 2,
in which at least one luminance block of the macroblock is assigned at least to the part of the edge of the first picture object.

4. Method according to one of Claims 1 to 3,
in which at least one picture block is assigned to the entire edge of the first picture object.

5. Method according to one of Claims 2 to 4,
in which information about the picture object is in each case assigned to all the macroblocks in which the edge is contained.

6. Method according to one of Claims 2 to 5,
in which the first picture object is addressed using a macroblock address respectively assigned to a macroblock.

7. Method according to one of Claims 2 to 6,
in which the second picture object is addressed using a macroblock address respectively assigned to a macroblock.

8. Method according to one of Claims 1 to 7,
used for coding a digitized picture.

9. Method according to one of Claims 1 to 7,
used for decoding a digitized picture.

10. Method according to one of Claims 1 to 9,
used in a mobile communications device.

11. Arrangement for processing a digitized picture (100) with pixels,
having a processor which is set up in such a way that

a) the pixels are grouped into picture blocks (101),
b) the picture is segmented into at least a first picture object (104) and a second picture object (105), at least one picture block being assigned to at least a part of an edge of the first picture object, and
c) information about the first picture object is assigned to the at least one picture block,

that the picture objects are coded with different quality,
that a quality specification indicating the quality with which a picture object is coded is assigned to at least one macroblock contained in the corresponding picture object,
**characterized**
**in that** the quality is determined by a spatial resolution.

12. Arrangement according to Claim 11,
in which the processor is set up in such a way that

a) a plurality of picture blocks are in each case grouped to form a macroblock, and
b) a macroblock is assigned at least to the part of the edge.

13. Arrangement according to Claim 11 or 12,
used for coding a digitized picture.

14. Arrangement according to Claim 11 or 12,
used for decoding a digitized picture.

15. Arrangement according to one of Claims 11 to 14,
used in a mobile communications device.

**Revendications**

1. Procédé de traitement d'une image numérisée (100) dotée de points d'image,

a) dans lequel les points d'image sont groupés en blocs d'image,
b) dans lequel l'image est segmentée en au moins un premier objet d'image (104) et un deuxième objet d'image (105), au moins une partie d'un bord du premier objet d'image se voit attribuer au moins un bloc d'image,
c) dans lequel ledit au moins un bloc d'image se voit attribuer une information sur le premier objet d'image,
d) dans lequel les objets d'image sont codés dans une qualité différente,
e) dans lequel une information de qualité indiquant dans quelle qualité un objet d'image est codée est attribuée à au moins un macrobloc (102) contenu dans l'objet d'image correspondant,

   **caractérisé en ce que**

f) la qualité est déterminée par une résolution locale.

2. Procédé selon la revendication 1,

a) dans lequel plusieurs blocs d'image à chaque fois sont groupés en un macrobloc et
b) dans lequel au moins la partie du bord se voit attribuer un macrobloc.

**3.** Procédé selon la revendication 2, dans lequel au moins la partie du bord du premier objet d'image se voit attribuer au moins un bloc de luminance du macrobloc.

**4.** Procédé selon l'une des revendications 1 à 3, dans lequel l'ensemble du bord du premier objet d'image se voit attribuer au moins un bloc d'image.

**5.** Procédé selon l'une des revendications 2 à 4, dans lequel tous les macroblocs contenant le bord se voient attribuer à chaque fois une information sur l'objet d'image.

**6.** Procédé selon l'une des revendications 2 à 5, dans lequel le premier objet d'image fait l'objet d'un adressage au moyen d'une adresse de macrobloc attribuée à respectivement un macrobloc.

**7.** Procédé selon l'une des revendications 2 à 6, dans lequel le deuxième objet d'image fait l'objet d'un adressage au moyen d'une adresse de macrobloc attribuée à respectivement un macrobloc.

**8.** Procédé selon l'une des revendications 1 à 7, utilisé pour le codage d'une image numérisée.

**9.** Procédé selon l'une des revendications 1 à 7, utilisé pour le décodage d'une image numérisée.

**10.** Procédé selon l'une des revendications 1 à 9, utilisé dans un appareil de communication mobile.

**11.** Dispositif de traitement d'une image numérisée (100) dotée de points d'image, comprenant un processeur qui est configuré de telle sorte que

a) les points d'image sont groupés en blocs d'image (101),
b) l'image est segmentée en au moins un premier objet d'image (104) et un deuxième objet d'image (105), au moins une partie d'un bord du premier objet d'image se voit attribuer au moins un bloc d'image,
c) ledit au moins un bloc d'image se voit attribuer une information sur le premier objet d'image,

que les objets d'image sont codés avec une qualité différente,
qu'une information de qualité indiquant dans quelle qualité un objet d'image est codé est attribuée à au moins un macrobloc contenu dans l'objet d'image correspondant,
**caractérisé en ce que**
la qualité est déterminée par une résolution locale.

**12.** Dispositif selon la revendication 11, dans lequel le processeur est configuré de telle sorte que

a) plusieurs blocs d'image à chaque fois sont groupés en un macrobloc et
b) au moins la partie du bord se voit attribuer un macrobloc.

**13.** Dispositif selon la revendication 11 ou 12, utilisé pour le codage d'une image numérisée.

**14.** Dispositif selon la revendication 11 ou 12, utilisé pour le décodage d'une image numérisée.

**15.** Dispositif selon l'une des revendications 11 à 14, utilisé dans un appareil de communication mobile.

# FIG 1

# FIG 2

# FIG 3

EP 1 116 184 B1

# FIG 4

Segmentierung des Bildes in
Bildobjekte

~ 401

↓

Zuordnung von
Codierungsparametern zu
jeweils einem Bildobjekt

~ 402

↓

Für jedes Bildobjekt wird ein
eine Qualitätsangabe
ausgewählt und diesem
zugeordnet, mit der
angegeben wird, in welcher
Qualität das Bildobjekt codiert
werden soll

~ 403

↓

Codierung jedes Bildobjekts
gemäß den
Codierungsparametern in der
jeweiligen in der
Qualitätsangabe
vorgegebenen Qualität

~ 404

Übertragen des codierten
Bildes

~ 405

↓

Empfangen des codierten
Bildes

~ 406

↓

Decodierung und
Rekonstruktion des
digitalisierten Bildes unter
Verwendung der
Codierungsparameter und der
Qualitätsangabe

~ 407